# EUROPEAN PATENT APPLICATION

(11) **EP 2 966 142 A1**
(43) Date of publication of application: **13.01.2016**
(21) Application number: 14075043.1
(22) Date of filing: 07.07.2014
(51) Int. Cl.: C09K 5/10

(54) **A liquid thermal conduction enhancer composition and method of manufacturing thereof.**

(71) Applicant: Pasmans, Alex, 2600 Berchem (BE)
(72) Inventor: Pasmans, Alex, 2600 Berchem (BE)

(57) **Abstract**

A liquid thermal conduction enhancer and method of manufacturing thereof. Particularly, the application provides a thermal conduction enhancer composition which comprises of glycol ester, amine ester, lubricants and borax solution; wherein said thermal conduction enhancer composition is characterized by enhancing thermal conduction by increasing dynamic viscosity level at a low temperature.

## Description

### FIELD OF THE INVENTION

The present application generally relates to the field of thermal conduction compositions. Particularly, the application provides a liquid thermal conduction enhancer composition and method of manufacturing thereof.

### BACKGROUND OF THE INVENTION

Thermal conduction compositions are used for transferring internal energy of any system generating energy due to a temperature gradient. Thermal conduction compositions have diverse applications from electronics to paints and coatings. Physical properties of any such thermal conduction composition such as viscosity could be considered as a key determinant for ascertaining thermal conduction capacity of said thermal conduction composition. Water is one of the most common ways of transferring energy from any system due to its thermal conduction properties. However, due to its low level of dynamic viscosity at low temperature and thereby reduced thermal conductivity capacity, it is not preferred in closed circuits.

Prior art literature illustrates a variety of compositions for enhancing thermal conduction. However, most of the prior art doesn't discloses inorganic substances as compounding ingredients for thermal conduction enhancer compositions; heat-transfer, heat-exchange or heat-storage materials, which could not address the problem of enhancing thermal conduction by way of increasing dynamic viscosity level at a low temperature, in compare to water. Moreover, most of the prior art doesn't discloses compositions for thermal conduction enhancer which could enhance thermal conduction in closed circuits.

Thus prior art solutions fail to provide a thermal conduction enhancer composition which could enhance thermal conduction by way of increasing dynamic viscosity level at a low temperature, in compare to water. Prior art solutions also fail to provide a thermal conduction enhancer composition which could enhance thermal conduction in closed circuits.

Thus, in the light of the above mentioned background art, it is evident that, there is a need for a thermal conduction enhancer which could enhance thermal conduction by way of increasing dynamic viscosity level at a low temperature. There is also a need to provide a thermal conduction enhancer composition which could enhance thermal conduction in closed circuits. A liquid thermal conduction enhancer composition and method of manufacturing thereof is desired.

### OBJECTIVES OF THE INVENTION

In accordance with the present invention, the primary objective is to provide a liquid thermal conduction enhancer composition and method of manufacturing thereof.

Another objective of the present invention is to provide a thermal conduction enhancer composition and method of manufacturing thereof; wherein said thermal conduction enhancer composition enhances thermal conduction by way of increasing dynamic viscosity level at a low temperature.

Another objective of the present invention is to provide a thermal conduction enhancer composition which could enhance thermal conduction in closed circuits.

### SUMMARY OF THE INVENTION

Before the present methods, systems, and hardware enablement are described, it is to be understood that this invention is not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention.

The present invention provides a liquid thermal conduction enhancer composition and method of manufacturing thereof.

In an embodiment of the present invention, a thermal conduction enhancer composition and method of manufacturing is provided wherein said thermal conduction enhancer composition comprising of glycol ester, amine ester, lubricants and borax solution. The thermal conduction enhancer composition is characterized by enhancing thermal conduction by way of increasing dynamic viscosity level at a low temperature in closed circuits.

The above said method and method of manufacturing is provided for a liquid thermal conduction enhancer composition but also can be used for many other applications.

### DETAILED DESCRIPTION OF THE INVENTION

Some embodiments of this invention, illustrating all its features, will now be discussed in detail.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The disclosed embodiments are merely exemplary of the invention, which may be embodied in various forms.

The present invention relates to a liquid thermal conduction enhancer composition for closed circuits, which enhances thermal conduction by increasing dynamic viscosity level at a low temperature.

In an embodiment of the present invention, a thermal conduction enhancer composition is provided. The thermal conduction enhancer composition comprises of glycol ester, amine ester, lubricants and borax solution. The thermal conduction enhancer composition is characterized by enhancing thermal conduction by increasing dynamic viscosity level at a low temperature. Specific Heat capacity Cp value of the thermal conduction enhancer composition enhances thermal conduction by increasing dynamic viscosity level at a low temperature. The thermal conduction enhancer composition of the present invention enhances thermal conduction for closed circuits.

In another embodiment of the present invention, the thermal conduction enhancer composition enhances conductivity of energy by 30% comparing to water. Further, the liquid thermal conduction enhancer composition reduces energy costs and carbon emissions.

In another embodiment of the present invention, the thermal conduction enhancer composition is applicable for both cold energy transfer and warm energy transfer. The application of the thermal conduction enhancer composition in the cold energy transfer includes circulation of cooling installations for industrial use, shipping and storage of liquids under low temperatures, industrial AC's circuits. The application of the thermal conduction enhancer composition in the warm energy transfer includes closed geo-thermal circuits, heat installations for industrial use for shipping or storage of liquids on high temperatures, domestic closed heat circuits.

In another embodiment of the present invention, the thermal conduction enhancer composition is a liquid thermal conduction enhancer composition. The thermal conduction enhancer composition is a fluid. The thermal conduction enhancer composition has a specific light smell. The thermal conduction enhancer composition improves anti-corrosion and controlling the pH values with water. The thermal conduction enhancer composition is of red color. The thermal conduction enhancer composition has a pH value of 8.80. The thermal conduction enhancer composition has a freezing point of -45C at 50% diluted composition. The thermal conduction enhancer composition has a boiling point of 197C. The thermal conduction enhancer composition has a boiling point of 118C at 50% diluted composition. The thermal conduction enhancer composition has density of 1.06G/CM3 of 50% diluted composition at 20C. The thermal conduction enhancer composition has a flash point of 2830C. The thermal conduction enhancer composition has a high flash point of 50% diluted composition. The thermal conduction enhancer composition has a dynamic viscosity of 12,2368 mPa.s at 25C. The thermal conduction enhancer composition has a vapour pressure of 173MM Hg = 0.23 BAR = 0.023 Mpa at 80C. The thermal conduction enhancer composition is completely soluble in water.

In another embodiment of the present invention, a method of manufacturing is provided for a thermal conduction enhancer composition for enhancing thermal conduction by increasing dynamic viscosity level at a low temperature; wherein said method of manufacturing of the thermal conduction enhancer composition comprising of combining at least one type of glycol ester, amine ester, lubricants and borax solution.

### ADVANTAGES

The present invention provides a thermal conduction enhancer composition for enhancing thermal conduction by increasing dynamic viscosity level at a low temperature. The thermal conduction enhancer composition is safe to use with coal, fuel or natural gas based heating systems. The vaporization of the thermal conduction enhancer composition is nearly zero. The thermal conduction enhancer composition enables faster transfer of energy in closed systems thereby reducing time for transferring energy and producing energy efficiently, irrespective of source which is producing the energy such as coal, oil, gas or electricity. The thermal conduction enhancer composition increases conductivity thereby reducing the timeframe of the energy production (energy combustion). The thermal conduction enhancer composition reduces energy costs and carbon emissions.

The illustrations of arrangements described herein are intended to provide a general understanding of the structure of various embodiments, and they are not intended to serve as a complete description of all the elements and features of apparatus and systems that might make use of the structures described herein. Many other arrangements will be apparent to those of skill in the art upon reviewing the above description. Other arrangements may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

The preceding description has been presented with reference to various embodiments. Persons skilled in the art and technology to which this application pertains will appreciate that alterations and changes in the described structures and methods of operation can be practiced without meaningfully departing from the principle, spirit and scope.

## Claims

1. A thermal conduction enhancer composition comprising of glycol ester, amine ester, lubricants and borax solution; wherein said thermal conduction enhancer composition is **characterized by** enhancing thermal conduction by increasing dynamic viscosity level at a low temperature.

2. The thermal conduction enhancer composition as claimed in claim 1, wherein said thermal conduction enhancer composition is a liquid thermal conduction enhancer composition.

3. The thermal conduction enhancer composition as claimed in claim 1, wherein said thermal conduction enhancer composition enhances thermal conduction for closed circuits.

4. The thermal conduction enhancer composition as claimed in claim 1, wherein said thermal conduction enhancer composition enhances conductivity of energy by 30%.

5. The thermal conduction enhancer composition as claimed in claim 1, wherein said thermal conduction enhancer composition is applicable for both cold energy transfer and warm energy transfer.

6. The thermal conduction enhancer composition as claimed in claim 1, wherein said thermal conduction enhancer composition is of red color.

7. The thermal conduction enhancer composition as claimed in claim 1, wherein pH value of said thermal conduction enhancer composition is 8.80.

8. The thermal conduction enhancer composition as claimed in claim 1, wherein freezing point of said thermal conduction enhancer composition is -45C at 50% diluted composition.

9. The thermal conduction enhancer composition as claimed in claim 1, wherein boiling point of said thermal conduction enhancer composition is 197C.

10. The thermal conduction enhancer composition as claimed in claim 1, wherein boiling point of said thermal conduction enhancer composition is 118C at 50% diluted composition.

11. The thermal conduction enhancer composition as claimed in claim 1, wherein the density of said thermal conduction enhancer composition at 20C is 1.06G/CM3 at 50% diluted composition.

12. The thermal conduction enhancer composition as claimed in claim 1, wherein flash point of said thermal conduction enhancer composition is 283C.

13. The thermal conduction enhancer composition as claimed in claim 1, wherein dynamic viscosity of said thermal conduction enhancer composition at 25C is 12,2368 mPa.s.

14. The thermal conduction enhancer composition as claimed in claim 1, wherein vapour pressure of said thermal conduction enhancer composition at 80C is 173MM Hg = 0.23 BAR = 0.023 Mpa.

15. The thermal conduction enhancer composition as claimed in claim 1, wherein said thermal conduction enhancer composition is completely soluble in water.

16. A method of manufacturing a thermal conduction enhancer composition for enhancing thermal conduction by increasing dynamic viscosity level at a low temperature; wherein said method of manufacturing of the thermal conduction enhancer composition comprising of combining at least one type of glycol ester, amine ester, lubricants and borax solution.
